# EUROPEAN PATENT SPECIFICATION

(11) **EP 2 347 346 B1**
(45) Date of publication and mention of the grant of the patent: **05.12.2012**
(21) Application number: 09795314.5
(22) Date of filing: 20.10.2009
(51) Int. Cl.: G06F 17/30

(54) **METHOD FOR MULTIMEDIA CONTENT SEARCH ON THE INTERNET**
VERFAHREN ZUR MULTIMEDIA-INHALTSSUCHE IM INTERNET
PROCÉDÉ DE RECHERCHE DE CONTENUS MULTIMÉDIA SUR INTERNET

(30) Priority: 20.10.2008 IT MI20081858
(43) Date of publication of application: 27.07.2011
(73) Proprietor: FacilityLive S.r.l., Pavia (IT)
(72) Inventor: LOTITO, Gianpiero Giuseppe, 27100 Pavia (IT)
(74) Representative: Ferrari, Barbara
(86) International application number: PCT/EP2009/007508
(87) International publication number: WO 2010/046086

(56) References cited:
- US-A1- 2002 107 718
- US-A1- 2007 067 267
- US-A1- 2008 082 512
- US-A1- 2008 086 456
- US-A1- 2008 168 052
- US-A1- 2008 242 343

## Description

### Field of application

The present invention refers to a method for multimedia content search on the internet, comprising the steps of connecting a client to the internet, loading a search page of an internet provider, comprising a field in which a search text is inserted associated to a multimedia content to be searched, transmitting the search text from the client to the internet provider and executing an application in said provider to detect multimedia contents associated to the search text and stored in a plurality of servers connected to the internet provider, transmitting a results page to the client, comprising at least one internet address per each detected multimedia content.

### Prior art

As well known, the multimedia content search methods on the internet provide for connecting a client, for example a personal computer, a PDA or a mobile telephone, to the internet and loading a search page of an internet provider, also connected to the internet. In particular, the term internet provider is used to indicate a server, comprising the search page and an application for providing a multimedia content search service.

Even more in particular, the search page comprises text box or search field in which the user inserts a keyword or a search text in general, associated to the multimedia content the user intends to search, and an "enter" button that transfers the search text from the client to the internet provider, which executes an application to search multimedia contents associated to the search text.

Even more in particular, the internet provider communicates with a plurality of servers connected to the internet which store multimedia contents associated to the search text, records the internet addresses, the so-called URLs of such multimedia contents and transmits to the client a results page comprising at least one URL per each detected multimedia content.

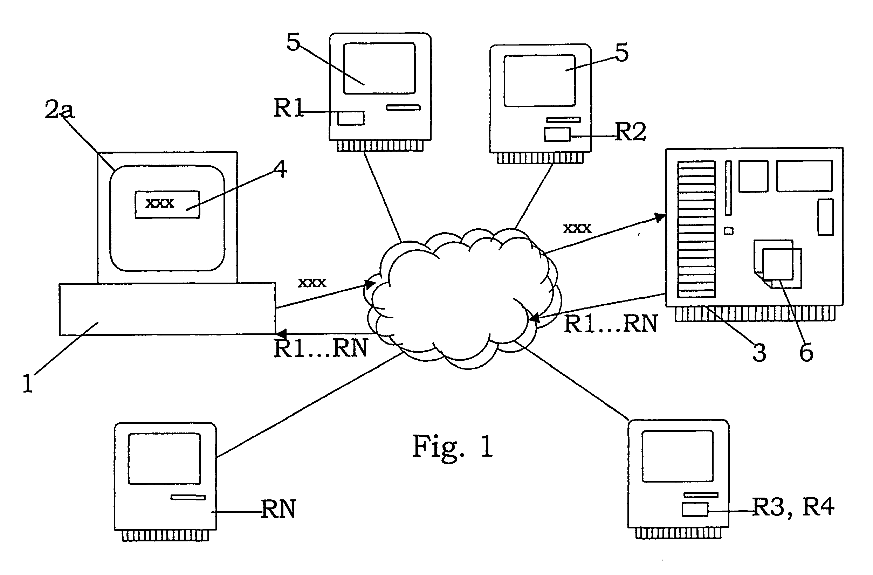

Referring to figure 1 schematically represented is a client 1 comprising a display loaded in which is a search page 2a of a provider 3 connected to the client 1 through the internet and a plurality of servers 5 which store respective multimedia contents R1...RN. The multimedia contents are stored in different servers 5, for example content R1 in a first server, content R2 in a second server, contents R3 and R4 in a third server and content RN in a fourth server.

Multimedia contents R1...RN are in different electronic formats, for example images, audio, video, text etc.

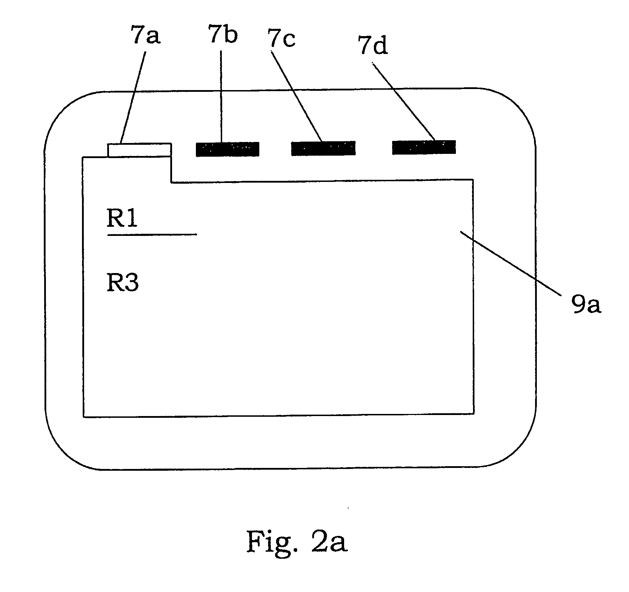

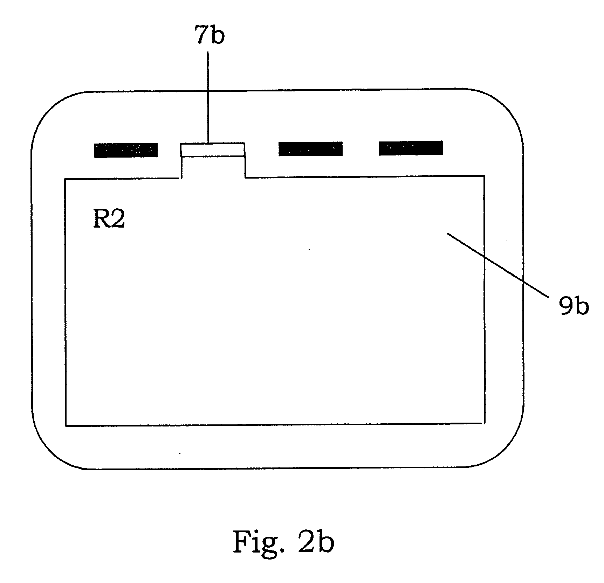

The search page 2a comprises a search field, for example a text box 4 into which a search text "xxx" is inserted and subsequently sent to the provider 3, which will execute an application 6 to detect - in the servers 5 - the multimedia contents R1, ..., RN associated to the search text "xxx". The application 6 inserts the internet addresses or URLs of the multimedia contents (also indicated, for simplification purposes with references R1,...,RN) in a results page 9a and transmits such results page 9a to the client 1. The client 1 loads the results page 9a in the display, as represented in figure 2. In order to improve the reading and the selection of the multimedia contents detected, known methods insert only the internet addresses of the multimedia contents in the results page 9a in a predetermined electronic format, for example HTML or text format, and group the addresses associated to the multimedia contents in other formats in different pages 9b, 9c, 9d, accessible through respective buttons 7b, 7c, 7d or hypertext links found on the results page 9a, each associated to a respective type of multimedia content. The results pages 9b, 9c, 9d in turn comprise a button for returning to the results page 9a. For example, pages 9b, 9c, 9d comprise images, videos and social networks, respectively.

Though advantageous, given that they provide an overall classification of the type of information found by the internet provider, in particular, according to their format, these methods however reveal the considerable disadvantage that the user is required to click on a hypertext link 7b to display a corresponding results page 9b, and such page 9b replaces, on the display of the client 1, the page 9a loaded previously, substantially preventing simultaneous display of internet addresses regarding different types of multimedia contents in a same results page.

Another disadvantage of the known methods consists in the fact that in order to display a detected multimedia content during the search and listed in a results page by the respective internet address, it is necessary to load a new web page comprising such multimedia content, at times leading to undesired increase of waiting times and costs for the user. This operation is particularly disadvantageous, especially in cases where a user would like to view a plurality of multimedia contents, given that several web pages, comprising the respective multimedia contents are loaded into the display device. In particular, the opening of different web pages, each associated to a multimedia content, prevents having a practical and simple display of the search results.

Also known are methods in which the multimedia content, after having been selected through the corresponding internet address, is loaded in place of the results page, see for example US 2007/0067267.

However, these methods are subject to the disadvantage of losing the results page content, forcing the user, in case he is not interested in the selected content or in case he wants to select other multimedia contents, to return to the search page and perform a new search.

The technical problem on which the present invention is based is that of providing a method for searching multimedia contents capable of allowing grouping multimedia contents detected according to content type or format and simultaneously capable of allowing a quick display of different types of contents and their simple selection and loading, overcoming the problems still affecting search methods of the prior art.

### Summary of the invention

The object of the invention is solved by the features of the appended claims.

The solution idea of the present invention is that of dividing a single results page of an internet search into a plurality of areas, each associated to a predefined multimedia content type or format, listed inside which is a plurality of internet addresses of corresponding multimedia contents.

According to such solution idea, the abovementioned technical problem is solved by a method for multimedia content search on the internet, comprising the steps of connecting a client to the internet, loading a search page of an internet provider, comprising a field in which a search text associated to a multimedia content to be searched is inserted, transmitting the search text from the client to the internet provider and executing an application in the internet provider to detect multimedia contents associated to the search text and stored in a plurality of servers connected to the provider or to the internet, transmitting a results page to said client, comprising at least one internet address per each detected multimedia content, characterised in that it comprises the steps of defining predetermined types of multimedia contents, assigning each detected multimedia content to a predetermined type, dividing the results page into a plurality of areas, each associated to a corresponding type and loading in each area of the results page a predefined number of internet address of the multimedia contents of the corresponding type.

Advantageously, according to the method of the present invention, the different types of multimedia contents, though being associated to different areas, are grouped in a single results page and displayable simultaneously, without loading a different page for each type of multimedia content.

According to the method of the invention, the loading of the internet addresses in the corresponding areas comprises a step of transferring the respective multimedia contents from the servers in which they were detected to a memory of the client. Advantageously, the multimedia content in the memory of the client can be displayed in an "off-line" mode, that is even when the client or the server are not connected to the internet. The search method according to the present invention, due to the division of the results page into areas, also allows adding numerous improvements regarding selection and display of the multimedia contents associated to the internet addresses, among which the possibility to select an address, preferably through a "drag&drop" technique, from the corresponding area to a folder for memorising addresses.

Advantageously, the storage folder allows quick saving of the addresses associated to the preferred multimedia contents, as well as grouping different types of contents.

Advantageously, also the storage folder is displayed as an area of the results page.

Also saving internet addresses in the storage folder comprises transferring the corresponding multimedia content from the server to the memory of the client thus allowing displaying in "off-line" mode.

It is also provided for that the number of areas in the results page be configurable by the user through a toolbar or widgets bar, comprising graphic buttons for selecting/de-selecting the respective areas. In particular, each area of the results page comprises an application, also referred to as widget, for the management of the display of the internet addresses.

Advantageously, the position and the size of the widgets of which the results page is made up can be configured by the user.

According the method of the present invention, multimedia contents of the same or different types which are displayed simultaneously in the single results page, are also simultaneously played in separate portions of the single results page. Further advantages of the search method according to the present invention shall be clear from the following description and from one of its embodiments strictly provided for exemplifying and non-limiting purposes.

### Brief description of the drawings

Figure 1 schematically represents a method for searching multimedia contents according to the prior art.
Le figure 2a-2b schematically represent two different steps of the search method according to figure 1.
Figure 3 schematically represents a method for searching multimedia contents according to the present invention.
Figure 4 schematically represents a step of the search method according to figure 3.
Figure 5 schematically represents another step of the search method according to figure 3.

### Detailed description

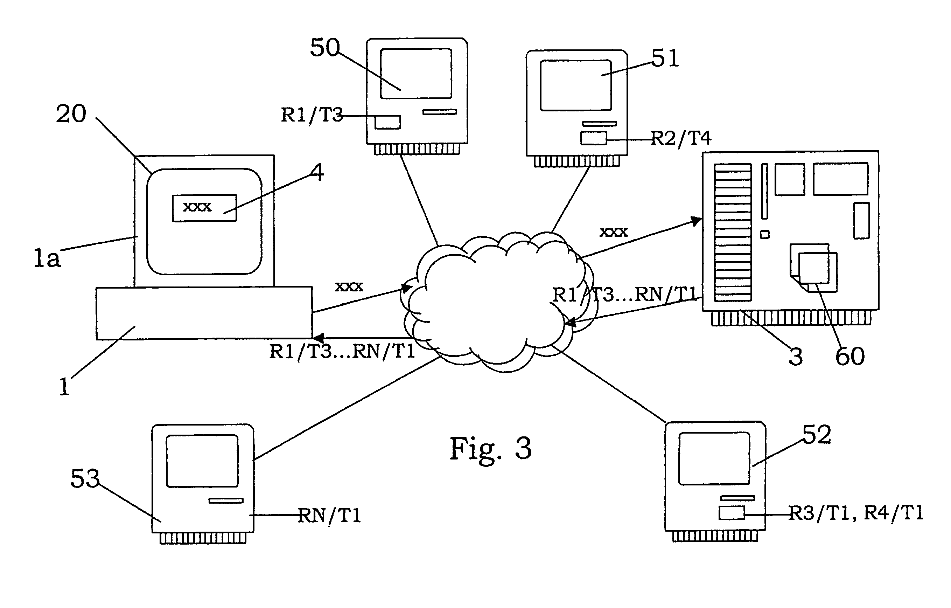

Referring to figures 3-5 schematically represented are the steps of the method for searching multimedia contents on the internet according to the present invention.

In particular, figure 3 represents a client 1 comprising a display 1a loaded in which is a search page 20 of a provider 3 connected to the client 1 through the internet and to a plurality of servers 50-54 which memorise respective multimedia contents R1...RN. Multimedia contents are stored in different servers, for example content R1 in a first server 50, content R2 in a second server 51, contents R3 and R4 in a third server 52 and content RN in a fourth server 53. Multimedia contents R1...RN are different electronic formats, for example images, audio, video, text etc. or websites, social networks, blogs, search engines, etc.

The search page 20 comprises a field 4 inserted in which is a keyword or generally a search text "xxx" associated to a multimedia content to be searched and a search activation button for transmitting the search text from the client 1 to the provider 3. The provider 3 receives the search text "xxx" and executes an application 60 to detect the internet addresses of the multimedia contents stored in the servers 50-54 connected thereto or accessible through the internet.

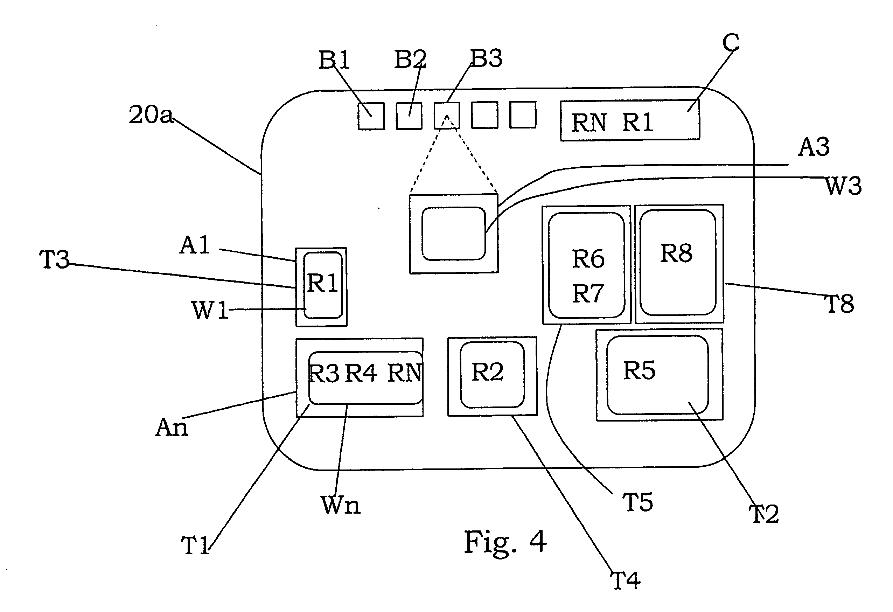

The internet provider 3 sends to the client 1 a results page 20a, schematically represented in figure 4 and comprises at least one internet address for each detected multimedia content.

According to the present invention, the search method comprises a step of defining predetermined types T1, ..., TN of multimedia contents, for example "image", "video", "audio", "documents", "blogs", "encyclopaedias", "social networks", "hypertext links" types etc, and automatically associating each detected multimedia content to a predetermined type. In particular, the step of associating is performed by detecting the format of the multimedia content depending on the extension of the file corresponding thereto, for example by associating the ".doc", ".txt", ".pdf" extensions to the "text" type and the ".mpeg" and "avi" extensions to the "video" type.

In particular, in order to detect some types, for example "blogs", "news", "social networks", etc., the step of associating comprises an analysis of the relative internet addresses, based on specific criteria for each type to be detected.

In particular, for the identification of the "blog" type or the "news" type, the analysis comprises a specific criterion of detecting a keyword in a domain included in the internet address of the multimedia content. For example, analysis of the address "www.hostname.com/dominio/folder/.../news" or of the internet address "www.host3.com/dominio/.../blog" through the specific criterion of detecting a keyword, respectively identifies the "news" keyword and the "blog" keyword, and the relative internet addresses are associated to the "news" and "blog" types. Still referring to figure 3, the provider 3 receives a search text "xxx" from the client 1 and executes the application 60 to detect multimedia contents in the servers 50-54, detecting, in particular, a multimedia content R1 in a first server 50, a multimedia content R2 in a second server 51, two different multimedia contents R3, R4 in a server 52, and a multimedia content RN in a server 53.

The application 60 assigns a type to the detected multimedia contents R1, ..., RN and, in particular, assigns type T1, for example "video" to multimedia contents R3, R4, RN, type T3, for example "text", to multimedia content R1 and type T4, for example "image", to multimedia content R2.

As schematically represented in figure 4, the method according to the present invention inserts the internet addresses of the multimedia contents R1, ..., RN in a results page 20a and divides the results page 20a in a plurality of areas A1, A2, AN, each associated to a corresponding type T1, T2, ..., TN.

In particular, the application 60 loads, in each area A1, A2, AN, a predefined number of links or internet addresses associated to the multimedia contents R1, ... , RN of the corresponding type T1, ... , TN.

The definition of the predefined types T1, ..., TN comprises a step of assigning at least one display device or software, also referred to as player, to each type T1, ..., TN. As clearly observable from the following description, player is used for displaying multimedia contents of the corresponding type T1, ..., TN. For example, a text display such as "Adobe Acrobat Reader®" is allocated to a "PDF" type, an Open Source video display, such as for example Video LAN, is allocated to the "video" type and an Open Source image display, for example GIMP or Picasa, is allocated to the "images" type.

Schematically represented in figure 4 is the results page 20a in which an area A1 is associated to the type T3 and comprises the internet address of the multimedia content R1 and an area An is associated to the type T1 and comprises the internet addresses of the multimedia contents R3, R4, RN. Indicated in the areas A1, ..., An of figure 4 are reference numbers of the multimedia contents but it is clear that borne in such areas are only the respective internet addresses.

Advantageously, the addresses of the multimedia contents R1 and RN, belonging to two different types, respectively T3 and T1, are displayed in two different areas A1, An which are integrated in the same results page 20a, in particular a web page, and displayed simultaneously.

According to the method of the invention, the step of dividing the results page into different areas comprises programming a widget W1, Wn for each area A1, An, inserted inside which is a list of the internet addresses of the same type.

Regarding this, it should be observed that, the widgets are commonly used as applications comprising graphic elements incorporatable into web pages, each comprising a specific service such as time, news, weather, etc.. and they are provided by a respective provider of the specific service. Advantageously, according to the present invention, the widgets are associated to the same service, i.e. that is displaying multimedia contents associated to the search text inserted by the user, and they are provided by the application 60 which sees to their programming, depending on the type of multimedia content associated thereto.

In particular, the player allocated to a type T1, ..., TN is automatically associated also to the widget W1, ..., Wn programmed for the corresponding area A1, ..., An.

According to the method of the invention, loading internet addresses into the corresponding areas A1, An also comprises a step of transferring respective multimedia contents R1, ..., RN from the servers 50-54 in which they were detected to a memory of the client 1. Advantageously, the multimedia content R1, ..., RN in the memory of the client 1 can be displayed in "off-line" mode, when the client and/or the server are not connected to the internet, as clearly observable from the following description.

The method according to the present invention also comprises a step of selecting, from one of the areas A1, ..., An, an internet address of a multimedia content R1, ..., RN, and a step of memorising the selected address, for a subsequent connection to the server 50-54. The steps of selecting and memorising the contents can be repeated to save the internet addresses of different types of multimedia contents.

Preferably, selecting and memorising steps are performed through a "drag&drop" technique of the internet address, for example in hypertext format, from the respective area A1, An to a storage folder C of the results page 20a. In particular, the "dra&drop" technique consists in selecting, for example by means of a mouse cursor, the multimedia content link, and dragging the selected link into the storage folder C. Preferably, also the storage folder C is a widget. Advantageously, the method according to the invention allows saving the most important search results, in a single storage folder C which groups the internet links in different types of files, for example images, video, text, audio or links to other websites, social networks, blogs, etc..

Also saving internet addresses in the storage folder C comprises a transfer of the corresponding multimedia content R1, ..., RN from the servers 50-54 to the memory of the client 1 to allow displaying in "off-line" mode. Preferably, the multimedia contents R1, ..., RN of the storage folder C and the multimedia contents R1, ..., RN of the areas A1, ..., An are saved separately in the memory of the client.

According to the method of the present invention also provided for is a step of browsing internet addresses in the storage folder C, as well as a deletion step.

In particular, the browsing step is performed by selecting, for example using the mouse cursor, the storage folder and opening a corresponding memory window, listed in which are the stored internet addresses. Preferably, the internet addresses are grouped in the memory window into storage sub-folders, for example, divided according to the type of file ("document", "image", "video", "audio", etc.) or according to the performed search, for example indicating the search text "xxx".. In particular, for exemplifying purposes, associated to each storage sub-folder, may for example be a name indicating the multimedia contents inserted in each sub-folder.

The deletion step is performed by selecting, for example using the left button of the mouse, an internet address of the storage folder C or a storage sub-folder, and deleting it, for example using the right button of the mouse. Obviously, the deletion step may be implemented in a different manner, for example by selecting the internet address and dragging it into a trash basket available on the results page or by clicking on the delete button available in the widget.

In a substantially analogous manner, also provided for is the deletion of a storage sub-folder comprising a plurality of internet addresses.

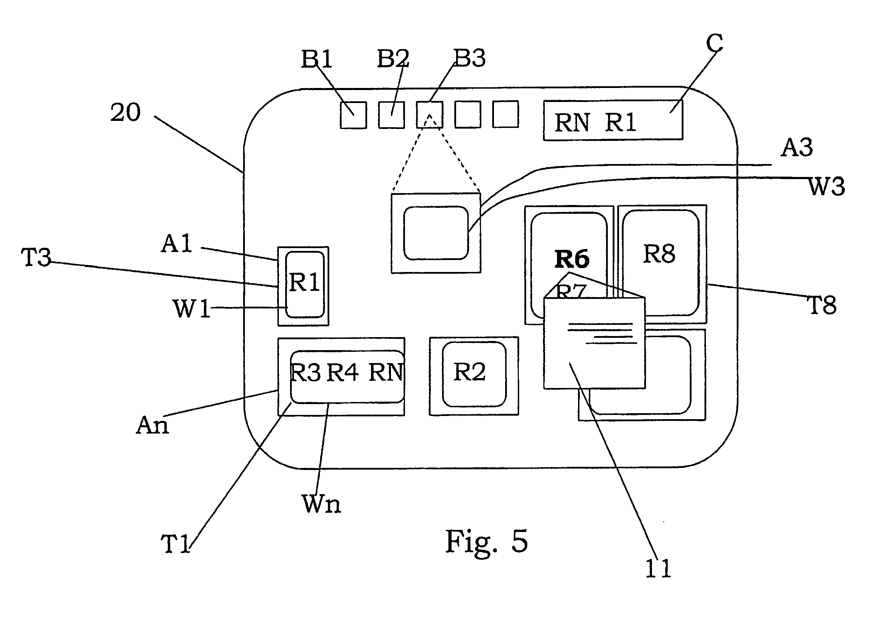

The method according to the present invention also comprises the step of displaying a preview of a content found on the site of destination, that is stored in one of the servers 50-54, by selecting the corresponding internet address from the list of a given widget. In particular, the selection comprises positioning the cursor, for example the mouse cursor, on an icon adjacent to the internet address of a specific widget and sending an actuation command, for example through a click of the mouse. Selecting the internet address provides for opening a smaller window 11 with respect to the results page 20a and inside such results page and displaying at least one portion of the content R2 associated to the internet address selected in the smaller window 11, as schematically represented in figure 5.

Also provided for is the possibility to execute the player associated to the corresponding widget in the smaller window 11, to display a single multimedia content R2 (audio, video, image etc.). The association of the player to the widget leads to the considerable advantage of being able to display the multimedia content without having to open a separate window where the player is to be executed and without having to connect to the site of destination, i.e. the server 50-54 in which the multimedia content is stored. However, according to the method of the present invention, it is also possible to execute the player in a separate window, for example full screen, and loading - into the player - the multimedia content stored by the memory of the client.

The method according to the invention provides for executing an analysis of the multimedia contents protected by copyrights. In particular, the application 60 identifies the multimedia contents protected by copyrights and blocks the display of at least part of the content or, if the content is not allowed to viewed in its entirety it signals such multimedia content and links back to the site of destination where the document is contained.

Advantageously, the smaller window 11 is integrated in the results page 20a through a preview function and allows a preview display of the multimedia content R2 selected without opening a new web page or loading the multimedia content in place of the results page 20a.

For example, listed inside a widget associated to a "news" type, can be a plurality of links regarding websites comprising news. According to the prior art, in order to display a web site associated to an internet address it is necessary to select the address and load the site into a new web page or into the results page. According to the method of the invention, by selecting the link associated to the desired website, a new smaller window with respect to the results page and integrated therein, allows displaying the news from the selected site, and, simultaneously, displaying the other widgets of the results page.

According to the method of the present invention, multimedia contents of a same or different types which are displayed simultaneously in the single results page, may be also simultaneously played in separate portions of the single results page, i.e. in corresponding smaller windows integrated therein.

For example, the multimedia contents comprising a plurality of text files, audio files, video files are simultaneously displayed as Internet addresses or links in corresponding areas of the single result page; two or more Internet addresses or links may be activated through corresponding activation operations which open predetermined players inside respective smaller windows and therein execute the multimedia contents.

Accordingly, a video file may be played contemporarily with an audio file in separate small windows which are contemporarily displayed in the single results page.

Of course, the contemporary playing of multimedia contents may also involve a same type of multimedia contents, for example two or more different video files or two or more text files.

Preferably, predetermined activation operations are associated to corresponding areas of the single result page and to the corresponding type of multimedia contents.

More particularly, the activation operations comprise a positioning of a mouse pointer over an Internet address or link. Preferably, the positioning of the mouse pointer over the Internet address or link is associated to text files, for example "pdf" or "word" files, for an immediate display of at least a portion of the corresponding file in the small window.

The activation operations comprise the positioning of the mouse pointer on the Internet address or link and a subsequent click over such Internet address or link. Preferably, the positioning of the mouse pointer on the Internet address or link and the following click is associated to video files because the activation of the corresponding video player is slower with respect to an activation of a text editor, and an explicit user request through the mouse click is preferred before playing the video. Furthermore, the activation operations comprise positioning the mouse pointer over a predetermined icon, for example a lens or a small preview thumbnail associated to the Internet address or link. Preferably, this activation is associated to image file, for which a thumbnail is always available. Advantageously, the thumbnail is also a preview for the image which may be displayed in the small window.

Obviously, any association of the above activation operations to different multimedia content are possible.

The step of dividing the search page into a plurality of areas provides for the possibility of adding or removing one or more widgets by selecting or de-selecting a button in a toolbar or widgets bar, present on the results page 20a.

Advantageously, the widgets selected when searching multimedia contents associated to a search text are also displayed during the subsequent searches associated to different research texts. Preferably, the application 60 excludes- from the results page 20a - the widgets that, though being selected, do not comprise internet addresses, given that the application 60 did not detect multimedia contents of the corresponding type.

Referring to figure 4, buttons B1 and B2 of the widgets bar are associated to two widgets W1, W2, already programmed for the respective areas A1, A2 and a button B3 is associated to a widget W3 and to a respective area which is added in the results page 20a when the button B3 is selected.

Advantageously, la results page 20a can be personalised by a user by selecting a plurality of widgets programmed according to the type of multimedia content associated thereto.

As described above, the method of the present invention automatically associates the multimedia contents to predefined types, according, for example, to the extension of the file or to the presence of a tag for detecting the detected multimedia content.

However, there is the possibility that a multimedia content of a first type T1, be erroneously automatically associated to a second type T2.

According to the method of the present invention, provided for is a step for validating the performed search which allows manual modification of the associations performed automatically between multimedia contents and types.

In particular, validation is performed manually by an operator and comprises the steps of:
- detecting a multimedia content erroneously associated to a first type and detecting a second type to be associated to the multimedia content;
- selecting the multimedia content and associating it manually to the second type.

The validation step is supported by a results page validation interface 20a, with a protected access, for example through a user name and password.

In particular, the selections and associations performed are stored in a database of the internet provider 3, accessible for the application 60. Advantageously, searching of multimedia contents associated to a search text "xxx" for which the validation step had already been performed, is free of erroneous automatic associations, given that such associations were removed manually, through the validation interface.

Preferably, the selection and association steps were performed through the "drag&drop" of the multimedia content detected by the widget W1 - corresponding to the type erroneously associated to it - to a second widget W2, corresponding to the second type.

In particular, the drag&drop is implemented through a so-called "Inter-widget" function which allows communication between the first widget W 1 and the second widget W2.

The "Inter-widget" function memorises a value "0", "1", or "-1" in each widget, respectively associated to a current status ("0"), to a reception status ("1") or to a transmission status ("-1") of the widget. The function of "dragf&drop" from widget W1 to widget W2 is implemented by modifying the value of widget W 1 from "0" to "-1" and the value of widget W2 from "0" to "1".

Advantageously, the method according to the present invention not only allows transmitting internet addresses from the internet provider 3 to a plurality of widgets W1, WN but also transferring the internet addresses between the widgets themselves, after such addresses have been transmitted, in the results page 20a, to the client 1. The validation step also comprises the allocation of a ranking value to each of the detected multimedia contents and elimination of the internet addresses of the multimedia contents not relevant to the search text. Advantageously, the internet addresses of the multimedia contents in the respective areas were ordered according to a decreasing ranking value according to importance, relevance and reliability of the source.

According to an example of the present invention, the validation interface of the results page 20a, comprises, in each widget and for each internet address to be validated, a field for inserting the ranking value. Preferably, the field is of the "check box" type comprising a plurality M of boxes corresponding to ranking values 1,...,M.

Preferably, the validation interface inserts a default value in the field, calculated automatically by the application 60, according to known ranking algorithms, and the operator modifies such value manually, increasing, decreasing, or leaving it unaltered. In this manner, the operator substantially contributes both to an orderly arrangement of the multimedia contents associated to the searches, and to the deletion of unwanted internet addresses.

The step of validating a search performed on a predetermined search text "xxx" can be repeated several times. In such case, the application 60, displays in each area and for each internet address, the ranking value automatically allocated by the application 60 or modified manually by an operator, through the validation interface.

According to the method of the present invention, the validation step also comprises an allocation of one or more "yyy" tags to the detected internet addresses and the storage of the tags in the database of the internet provider 3. In particular, upon allocation of the "yyy" tags, the multimedia contents associated to the respective internet addresses, can be detected by inserting the "yyy" tag in the text box 4.

In particular, the search methods according to the prior art are not capable of performing searches according to the actual semantics of the words, i.e. the linguistic meaning they are associated to and commonly interpreted by human beings.

Advantageously, the association of the "yyy" tag to the internet addresses inside the database of the internet provider 3, allows detecting the internet address through a search of the semantic type, i.e. using the language commonly used by human beings. The multimedia contents already validated are stored together with the corresponding "yyy" tag inside the database of the internet provider 3.

According to another aspect of the method of the present invention, internet addresses of multimedia contents not automatically detected by the application 60 may be manually associated to the tag "yyy" or included in the search results based on the predetermined search text "xxx", and stored in the database of the internet provider 3.

According to this aspect of the present invention, a search page including a plurality of multimedia contents which are automatically detected by the application 60, starting from the search text xxx, may be completely modified, i.e. removing the multimedia contents and adding a plurality of Internet addresses of multimedia contents not automatically detected. The added Internet addresses are associated and stored inside the database of the internet provider 3, together with corresponding tag "yyy".

Substantially, the modified search page is a dossier which is created from the user and stored in the database of the internet provider 3.

According to another aspect of the present invention, the validation comprises a step of modifying the multimedia content stored in the database of the internet provider 3. For example, a portion of a text file or its abstract may be modified.

Advantageously, according to the method of the present invention, the validation step is simplified by the preview display of the multimedia contents which allows the operator to assign a ranking value to a given content, without loading the multimedia content into a new web page or in place of the results page 20a.

Advantageously, according to the method of the present invention, the different types of multimedia contents, though being associated to different areas, are grouped in a single results page and displayable simultaneously, without loading a different web page for each type of multimedia content.

Advantageously, a storage folder allows quick saving of the addresses associated to the preferred multimedia contents, as well as grouping contents of different types.

## Claims

1. Method for searching multimedia contents in the Internet, comprising the steps of:
- connecting a client (1) to the Internet,
- loading a search page (20) of an Internet provider (3), including a field (4) wherein inserting a search text (xxx) associated to a multimedia content (R1, ..., RN) to be searched,
- transmitting the search text (xxx) from the client (1) to the Internet provider (3),
- executing an application (60) in said Internet provider (3) for detecting multimedia contents (R1, ..., RN) stored in a plurality of servers (50-54) connected thereto and associated to the search text (xxx),
- transmitting a results page (20a) from the Internet provider (3) to the client (1), including at least an Internet address for each multimedia contents detected (R1, ..., RN), **characterized by** comprising the following steps:
- defining predetermined types (T1, ..., TN) of multimedia contents,
- automatically associating each multimedia contents detected (R1, ..., RN) to a predetermined type (T1, ..., TN),
- dividing the results page (20a) in a plurality of areas (A1, ..., An), each associated to a corresponding type (T1, ..., TN),
- loading in each area (A1, ..., An) a predetermined number of Internet addresses of said multimedia contents detected (R1, ..., RN),
- programming of a widget (W1, ..., WN) for each area, including a list of said Internet addresses of said multimedia contents (R1, ..., RN) and setting the player associated to the area (A1, ..., An) to the widget (W1, ..., Wn) programmed for the area (A1, ..., An), and
- selecting an Internet address from said widget, opening in said results page (20a) a window of reduced size (11) with respect to a size of the results page (20a) and displaying at least a portion of said multimedia content (R1, ... , RN) in said window of reduced size (11).

2. Method according to claim 1 **characterized by** the fact that said step of defining said types (T1, ..., TN) includes a step of setting at least a displaying program or a player to each type (T1, ..., TN), for displaying said multimedia contents.

3. Method according to claim 1 **characterized by** the fact that said step of loading said Internet addresses includes a step of transmitting said multimedia contents (R1, ..., RN) from said server (50-54) to a memory of said client (1).

4. Method according to claim 1 **characterized by** comprising a step of selecting, from said areas (A1, ..., An), one of said multimedia contents (R1, ..., RN), and a step of storing the Internet address corresponding to the multimedia content selected (R1, ..., RN) in a storage folder (C) of said results page (20a).

5. Method according to claim 4 **characterized by** the fact that said step of selecting said multimedia content (R1, ..., RN) comprises a step of transmitting the multimedia content selected (R1, ..., RN) from the server (50-54) to the memory of the client (1).

6. Method according to claim 4 or 5 **characterized by** the fact that said steps of selecting and storing are executed through a "drag&drop" of the multimedia content (R1, ..., RN) from said area (A1, ..., An) to the storage folder (C).

7. Method according to claim 4 **characterized by** the fact that said storage folder (C) stores multimedia contents (R1, ..., RN) associated to different types (T1, ..., TN).

8. Method according to claim 7 **characterized by** the fact that said player is executed in said window of reduced size (11).

9. Method according to claim 8 **characterized by** the fact that said step of opening embeds said window of reduced size (11) within said results page (20a).

10. Method according to claim 9 **characterized by** the fact that two or more of said players are executed in corresponding windows of reduced size (11), for contemporarily playing one or more corresponding multimedia contents.

11. Method according to claim 10 **characterized by** the fact that said step of dividing the results page (20a) in a plurality of areas (A1, ..., An) comprises a step of adding or removing one or more of said widgets (W1, ..., WN), respectively, selecting or deselecting a corresponding button (B1, ..., B3) in a widgets toolbar loaded in said results page (20a).

12. Method according to claim 1 **characterized by** comprising a step of manually validating multimedia contents detected (R1, ..., RN) comprising the steps of:
- detecting an Internet address of a multimedia content associated (R1, ..., RN) erroneously to a first (T1) of said type (T1, ..., TN) and detecting a second type (T2) to be associated to said Internet address;
- selecting an Internet address and associating it manually to said second type.

13. Method according to claim 12 **characterized by** the fact that said steps of selecting and associating are executed through "drag&drop" of the said Internet address from a first area (A1) associated to the first type (T1) to a second area (A2) associated to the second type (T2).

14. Method according to claim 12 **characterized by** the fact that said displaying step comprises a phase of assigning a ranking value to each of said multimedia contents detected (R1, ..., RN), said multimedia contents being ordered in said areas (A1, ..., An) for decreasing ranking value.

15. Method according to claim 14 **characterized by** the fact that said step of assigning the ranking value comprises an automatic setting of a default value of ranking, assigned by a ranking algorithm, and a manual modification of said ranking value.

16. Method according to claim 12 **characterized by** the fact that said step of manually validating further comprises:
- deleting one or more internet addresses associated to said multimedia contents detected (R1, ..., RN);
- adding one or more internet addresses associated to multimedia contents not detected by said application (60).

17. Method according to claim 15 **characterized by** the fact that said step of validating further comprises:
- associating one or more ("yyy") tags to said internet addresses or to said added internet addresses;
- storing said tags ("yyy"), said internet addresses and/or said added internet address in a database of said internet provider (3).

## Patentansprüche

1. Verfahren zur Suche von Multimediainhalten im Internet, umfassend die Schritte des:
- Verbindens eines Clients (1) mit dem Internet,
- Ladens einer Suchseite (20) eines Internetproviders (3), die ein Feld (4) beinhaltet, wobei das Einfügen eines Suchtextes (xxx) mit einem zu suchenden Multimediainhalt (R1, ...; RN) assoziiert wird,
- Übermittelns des Suchtextes (xxx) von dem Client (1) zu dem Internetprovider (3),
- Ausführens einer Anwendung (60) in dem Internetprovider (3) zur Entwicklung von Multimediainhalten (R2, ...; RN), die in einer Vielzahl von Servern (50-54) gespeichert sind, die damit verbunden sind und mit dem Suchtext (xxx) assoziiert werden,
- Übermittelns einer Ergebnisseite (20a) von dem Internetprovider (3) zu dem Client (1), die mindestens eine Internetadresse für jede der ermittelten Multimediainhalte (R1, ..., RN) beinhaltet,
**gekennzeichnet durch**
das Umfassen der folgenden Schritte:
- Definieren vorbestimmter Typen (T1, ..., TN) von Multimediainhalten,
- automatisches Assozüeren jeder der ermittelten Multimediainhalte (R1, ...; RN) zu einem vorbestimmten Typ (T1, ..., TN),
- Teilen der Ergebnisseite (20a) in eine Vielzahl von Bereichen (A1, ..., An), von denen jeder mit dem entsprechenden Typ (T1, ..., TN) assoziiert wird,
- Laden einer vorbestimmten Anzahl von Internetadressen in jedem Bereich (A1, ..., An) der ermittelten Multimediainhalte (R1, ..., RN),
- Programmieren eines Widgets (W1, ..., WN) fürjeden Bereich, das eine Liste der Internetadressen der Multimediainhalte (R1, ..., RN) beinhaltet und Einstellen des Players, der mit dem Gebiet (A1, ..., An) mit dem Widget (W1, ..., Wn) assoziiert wird, der für das Gebiet (A1, ..., An) programmiert ist, und
- Auswählen einer Internetadresse von dem Widget, der auf der Ergebnisseite (20a) ein Fenster von reduzierter Größe (11) bezüglich einer Größe der Ergebnisseite (20a) öffnet und Anzeigen mindestens eines Teiles des Multimediainhalts (R1, ..., RN) in dem Fenster von reduzierter Größe (11).

2. Verfahren nach Anspruch 1
**gekennzeichnet dadurch, dass**
der Schritt des Definieren der Typen (T1, ..., TN) einen Schritt des Einstellens mindestens eines Anzeigenprogramms oder eines Players zu jedem Typ (T1, ...,TN) beinhaltet, zum Anzeigen der Multimediainhalte.

3. Verfahren nach Anspruch 1
**gekennzeichnet dadurch, dass**
der Schritt des Ladens der internetadressen einen Schritt des Übermittelns der Multimediainhalte (R1, ..., RN) von dem Server (50-54) zu einem Speicher des Clients (1) beinhaltet.

4. Verfahren nach Anspruch 1
**gekennzeichnet durch**
Umfassen eines Schrittes des Auswählens von den Bereichen (A1, ..., An) eines der Multimediainhalte (R1, ..., RN) und eines Schritts des Speicherns der Internetadresse, die dem Multimediainhalt (R1, ..., RN) entspricht und in einem Speicherordner (C) von der Ergebnisseite (20a) ausgewählt ist.

5. Verfahren nach Anspruch 4
**gekennzeichnet dadurch, dass**
der Schritt des Auswählens des Multimediainhalts (R1, ..., RN) einen Schritt des Übermitteins des ausgewählten Multimediainhalts (R1, ..., RN) von dem Server (50-54) zu dem Speicher des Clients (1) umfasst.

6. Verfahren nach Anspruch 4 oder 5
**gekennzeichnet dadurch, dass**
der Schritt des Auswählens und Speicherns durch ein "drag&drop" des Multimediainhaltes (R1, ...,RN) von dem Bereich (A1, ..., An) zu dem Speicherordner (C) ausgeführt wird.

7. Verfahren nach Anspruch 4
**gekennzeichnet dadurch, dass**
der Speicherordner (C) Multimediainhalte (R1, ..., RN) speichert, die mit verschiedenen Typen (T1, ..., TN) assoziiert werden.

8. Verfahren nach Anspruch 7
**gekennzeichnet dadurch, dass**
der Player in dem Fenster von reduzierter Größe (11) ausgeführt wird.

9. Verfahren nach Anspruch 8
**gekennzeichnet dadurch, dass**
der Schritt des Öffnen das Fensters von reduzierter Größe (11) innerhalb der Ergebnisseite (20a) einbettet.

10. Verfahren nach Anspruch 9
**gekennzeichnet dadurch, dass**
zwei oder mehrere der Player in entsprechenden Fenstern von reduzierter Größe (11) ausgeführt werden, zum gleichzeitigen Abspielen eines oder mehrerer entsprechendener Multimediainhalte.

11. Verfahren nach Anspruch 10
**gekennzeichnet dadurch, dass**
der Schritt des Teilens der Ergebnisseite (20a) in eine Vielzahl von Bereichen (A1, ..., An) einen Schritt des Hinzufügens oder Entfernens eines oder mehrerer der Widgets (W1, ..., WN), beziehungsweise Auswählen oder Deselektieren eines entsprechenden Buttons (B1, ..., B3) in einer Widgetsymbolleiste, die in der Ergebnisseite (20a) geladen ist, umfasst.

12. Verfahren nach Anspruch 1
**gekennzeichnet durch**,
Umfassen eines Schrittes des manuellen Validierens ermittelter Multimediainhalte (R1, ..., RN), umfassend die Schritte des:
- Ermittelns einer Internetadresse eines Multimediainhalts (R1, ..., RN), die fehlerhafterweise mit einem ersten (T1) des Typs (T1, ..., TN) assoziiert wird und Ermittelns eines zweiten Typs (T2), der mit der Internetadresse assoziiert werden soll;
- Auswählens einer Internetadresse und ihrem manuellen Assoziieren mit dem zweiten Typ.

13. Verfahren nach Anspruch 12
**gekennzeichnet dadurch, dass**
die Schritte des Auswählens und Assoziierens durch "drag&drop" der Internetadresse von einem ersten Bereich (A1), der mit dem ersten Typ (T1) assoziiert wird, zu einem zweiten Bereich (A2), der mit dem zweiten Typ (T2) assoziiert wird, ausgeführt werden.

14. Verfahren nach Anspruch 12
**gekennzeichnet dadurch, dass**
der anzeigende Schritt eine Phase des Zuordnens eines Rankingwerts zu jedem der ermittelten Multimediainhalten (R1, ...,RN) umfasst, wobei die Multimediainhalte in den Bereichen (A1, ..., AN) geordnet sind, zum Verringern eines Rankingwerts.

15. Verfahren nach Anspruch 14
**gekennzeichnet dadurch, dass**
der Schritt des Zuordnens des Rankingwertes ein automatisches Einstellen eines Defaultwerts eines Rankings, der durch einen Rankingalgorithmus zugeordnet wurde und eine manuelle Modifizierung des Rankingwertes umfasst.

16. Verfahren nach Anspruch 12
**gekennzeichnet dadurch, dass**
der Schritt des manuellen Validierens des Weiteren umfasst:
- Löschen eines oder mehrerer Internetadressen, die mit den ermittelten Multimediainhalten (R1, ...,RN) assoziiert werden;
- Hinzufügen eines oder mehrerer Internetadressen, die mit den nicht ermittelten Multimediainhalten assoziiert werden, die nicht durch die Anwendung (60) ermittelt werden.

17. Verfahren nach Anspruch 15
**gekennzeithnet dadurch, dass**
der Schritt des Validierens des Weiteren umfasst:
- Assoziieren eines oder mehrerer ("yyy") Tags mit den Internetadressen oder mit den hinzugefügten Internetadressen;
- Speichern der Tags ("yyy"), der Internetadressen und/oder der hinzugefügten Internetadresse in einer Datenbank des Internetproviders (3).

## Revendications

1. Procédé de recherche de contenus multimédias sur Internet, comprenant les étapes consistant à :
- connecter un client (1) à Internet ;
- charger une page de recherche (20) d'un fournisseur Internet (3), qui comprend un champ (4) dans lequel est inséré un texte de recherche (xxx) associé à un contenu multimédia (R1, ... , RN) à rechercher ;
- transmettre le texte de recherche (xxx) à partir du client (1) vers le fournisseur Internet (3) ;
- exécuter une application (60) chez ledit fournisseur Internet (3) pour détecter les contenus multimédias (R1, ... , RN) stockés dans une pluralité de serveurs (50-54) qui y sont connectés et qui sont associés au texte de recherche (xxx) ;
- transmettre une page de résultats (20a) à partir du fournisseur Internet (3) vers le client (1), qui comprend au moins une adresse Internet de chacun des contenus multimédias détectés (R1, ..., RN), **caractérisé en ce qu'**il comprend les étapes suivantes consistant à :
- définir des types prédéterminés (T1, ... , TN) de contenus multimédias ;
- associer automatiquement chaque contenu multimédia détecté (R1, ..., RN) à un type prédéterminé (T1, ..., TN) ;
- diviser la page de résultats (20a) en une pluralité de zones (A1, ..., An), chacune d'elles étant associée à un type correspondant (T1, ..., TN) ;
- charger dans chaque zone (A1, ... , An) un nombre prédéterminé d'adresses Internet desdits contenus multimédias (R1, ..., RN) détectés ;
- programmer un composant d'interface graphique (W1, ..., WN) pour chaque zone, qui comprend une liste desdites adresses Internet desdits contenus multimédias (R1, ..., RN), et régler le lecteur associé à la zone (A1, ..., An) vers le composant d'interface graphique (W1, ..., WN) programmé pour la zone (A1, ..., An) ; et
- sélectionner une adresse Internet à partir dudit composant d'interface graphique, en ouvrant dans ladite page de résultats (20a) une fenêtre de taille réduite (11) par rapport à la taille de la page de résultats (20a), et afficher au moins une partie dudit contenu multimédia (R1, ..., RN) dans ladite fenêtre de taille réduite (11).

2. Procédé selon la revendication 1, **caractérisé en ce que** ladite étape consistant à définir lesdits types (T1, ..., TN) comprend une étape consistant à régler au moins un programme d'affichage ou un lecteur vers chaque type (T1, ... , TN), afin d'afficher lesdits contenus multimédias.

3. Procédé selon la revendication 1, **caractérisé en ce que** ladite étape consistant à charger lesdites adresses Internet comprend une étape consistant à transmettre lesdits contenus multimédias (R1, ..., RN) à partir dudit serveur (50-54) vers une mémoire dudit client (1).

4. Procédé selon la revendication 1, **caractérisé en ce qu'**il comprend une étape consistant à sélectionner, à partir desdites zones (A1, ..., An), l'un desdits contenus multimédias (R1, ..., RN), et une étape consistant à stocker l'adresse Internet correspondant au contenu multimédia (R1, ..., RN) sélectionné dans un dossier de stockage (C) de ladite page de résultats (20a).

5. Procédé selon la revendication 4, **caractérisé en ce que** ladite étape consistant à sélectionner ledit contenu multimédia (R1, ..., RN) comprend une étape consistant à transmettre le contenu multimédia (R1, ..., RN) sélectionné à partir du serveur (50-54) vers la mémoire du client (1).

6. Procédé selon la revendication 4 ou 5, **caractérisé en ce que** lesdites étapes de sélection et de stockage sont exécutées par l'intermédiaire d'un « glisser-déposer » du contenu multimédia (R1, ..., RN) à partir de ladite zone (A1, ..., An) vers le dossier de stockage (C).

7. Procédé selon la revendication 4, **caractérisé en ce que** ledit dossier de stockage (C) stocke des contenus multimédias (R1, ..., RN) associés aux différents types (T1, ..., TN).

8. Procédé selon la revendication 7, **caractérisé en ce que** ledit lecteur est exécuté dans ladite fenêtre de taille réduite (11).

9. Procédé selon la revendication 8, **caractérisé en ce que** ladite étape d'ouverture incorpore ladite fenêtre de taille réduite (11) à l'intérieur de ladite page de résultats (20a).

10. Procédé selon la revendication 9, **caractérisé en ce que** deux desdits lecteurs ou plus sont exécutés dans des fenêtres correspondantes de taille réduite (11) de façon à lire de manière simultanée un ou plusieurs contenus multimédias correspondants.

11. Procédé selon la revendication 10, **caractérisé en ce que** ladite étape consistant à diviser la page de résultats (20a) en une pluralité de zones (A1, ..., An) comprend une étape consistant à ajouter à ajouter ou à retirer un ou plusieurs desdits composants d'interface graphique (W1, ..., WN), respectivement, à sélectionner ou à désélectionner un bouton correspondant (B1, ..., B3) dans la barre d'outils des composants d'interface graphique chargés dans ladite page de résultats (20a).

12. Procédé selon la revendication 1, **caractérisé en ce qu'**il comprend une étape consistant à valider manuellement les contenus multimédias (R1, ..., RN) détectés, comprenant les étapes consistant à :
- détecter une adresse Internet d'un contenu multimédia (R1, ..., RN) associé par erreur à un premier (T1) desdits types (T1, ..., TN) et détecter un deuxième type (T2) à associer à ladite adresse Internet ;
- sélectionner une adresse Internet et l'associer manuellement audit deuxième type.

13. Procédé selon la revendication 12, **caractérisé en ce que** lesdites étapes de sélection et d'association sont exécutées par l'intermédiaire d'un « glisser-déposer » de ladite adresse Internet à partir d'une première zone (A1) associée au premier type (T1) vers une deuxième zone (A2) associée au deuxième type (T2).

14. Procédé selon la revendication 12, **caractérisé en ce que** ladite étape d'affichage comprend une phase consistant à attribuer une valeur de rang à chacun desdits contenus multimédias (R1, ... , RN) détectés, lesdits contenus multimédias étant ordonnés dans lesdites zones (A1, ... , An) par valeurs de rang décroissantes.

15. Procédé selon la revendication 14, **caractérisé en ce que** ladite étape consistant à attribuer la valeur de rang comprend une étape consistant à régler automatiquement une valeur par défaut de rang, attribuée par un algorithme de classement, et une modification manuelle de ladite valeur de rang.

16. Procédé selon la revendication 12, **caractérisé en ce que** ladite étape de validation manuelle comprend en outre les étapes consistant à :
- supprimer une ou plusieurs adresses Internet associées auxdits contenus multimédias (R1, ... , RN) détectés ;
- ajouter une ou plusieurs adresses Internet associées aux contenus multimédias non détectés par ladite application (60).

17. Procédé selon la revendication 15, **caractérisé en ce que** ladite étape de validation comprend en outre les étapes consistant à :
- associer une ou plusieurs étiquettes (« yyy ») auxdites adresses Internet ou auxdites adresses Internet ajoutées ;
- stocker lesdites étiquettes (« yyy »), lesdites adresses Internet et/ou lesdites adresses Internet ajoutées dans une base de données dudit fournisseur Internet (3).
